# EUROPÄISCHE PATENTSCHRIFT

(11) **EP 3 585 553 B1**
(45) Veröffentlichungstag und Bekanntmachung des Hinweises auf die Patenterteilung: **31.05.2023**
(21) Anmeldenummer: 18706999.2
(22) Anmeldetag: 20.02.2018
(51) Int. Cl.: B23K 26/064, B23K 26/073, B23K 26/38, B23K 26/14

(54) **VORRICHTUNG ZUR LASERMATERIALBEARBEITUNG ENTLANG EINER BEARBEITUNGSRICHTUNG UND VERFAHREN ZUR MATERIALBEARBEITUNG MIT EINEM LASERSTRAHL**
DEVICE FOR LASER MATERIAL WORKING ALONG A WORKING DIRECTION AND METHOD FOR WORKING MATERIAL BY MEANS OF A LASER BEAM
DISPOSITIF PERMETTANT L'USINAGE DE MATÉRIAUX PAR LASER DANS UNE DIRECTION D'USINAGE ET PROCÉDÉ D'USINAGE DE MATÉRIAUX AU MOYEN D'UN FAISCEAU LASER

(30) Priorität: 21.02.2017 DE 102017001658
(43) Veröffentlichungstag der Anmeldung: 01.01.2020
(73) Patentinhaber: Precitec GmbH & Co. KG, 76571 Gaggenau (DE)
(72) Erfinder: RUDOLF, Andreas, 76456 Kuppenheim (DE)
(74) Vertreter: Ter Meer Steinmeister & Partner
(86) Internationale Anmeldenummer: PCT/EP2018/054126
(87) Internationale Veröffentlichungsnummer: WO 2018/153848

(56) Entgegenhaltungen:
- EP-A1- 2 980 033
- DD-A1- 256 274
- DE-A1-102011 116 833
- DE-A1-102015 101 263
- JP-A- 2014 018 839
- JP-A- 2014 018 839

## Beschreibung

Die vorliegende Offenbarung betrifft eine Vorrichtung zur Materialbearbeitung mit einem Laserstrahl entlang einer Bearbeitungsrichtung und ein Verfahren zur Materialbearbeitung mit einem Laserstrahl. Die vorliegende Offenbarung betrifft insbesondere eine Vorrichtung und ein Verfahren zum Laserschneiden eines Werkstücks.

### Stand der Technik

Bei der Laserbearbeitung, also bei der Materialbearbeitung mittels Laserstrahlung, wie beispielsweise Laserschneiden, wird der von einer Laserlichtquelle austretende Laserstrahl mit Hilfe einer Strahlführungs- und Fokussierungsoptik auf das zu bearbeitende Werkstück fokussiert. Herkömmliche Vorrichtungen zur Materialbearbeitung können den Laserstrahl und einen Gasstrahl als Impulsquelle verwenden. In der Regel sind der Laserstrahl und der Gasstrahl rotationssymmetrisch ausgebildet. Mit solchen Laser- und Gasstrahlen werden Schnittspalte erzeugt, die beidseitig identisch und somit von gleicher Qualität sind, beispielsweise bezüglich Rauheit, Rechtwinkligkeit, Bartbildung, Homogenität, etc..

Beim Laserschneiden kann aus einem Werkstück ein Teil geschnitten werden. Typischerweise ist die Teilekontur so geformt, dass das Gegenstück keinen weiteren Zweck erfüllen kann und somit als Abfall entsorgt wird. Die Schnittqualität auf der "Abfallseite" ist daher oft nicht von Bedeutung. Es wäre daher vorteilhaft, die Schnittqualität auf der "Gutseite" zu erhöhen.

Aus der WO 2011/154461 A2 ist es bekannt, eine Oberflächenstruktur einer Bestrahlfront in Abhängigkeit eines gewünschten Bearbeitungsergebnisses einzustellen. Die Oberflächenstruktur der Bestrahlfront kann beispielsweise durch geeignete Wahl von Strahleigenschaften des Laserstrahls, insbesondere von Polarisation und/oder Strahlprofil entlang der Schneidrichtung, eingestellt werden.

EP 2 980 033 A1 offenbart eine Bearbeitungsvorrichtung für ein Glassubstrat. Die Vorrichtung umfasst ein optisches System für einen Laserstrahl mit einem Lichtabschirmteil und einer Fokussierlinse.

DE 10 2015 101 263 A1 offenbart eine Siemensstern-Optik.

DE 10 2011 116 833 A1 offenbart eine Laserbearbeitungsmaschine, bei der ein Laserstrahl ein asymmetrisches Strahlprofil aufweist. Der Laserstrahl kann einen elliptischen Strahlquerschnitt aufweisen, dessen Hauptachse entlang des Schnittspalts ausgerichtet ist.

JP 2014 018 839 A beschreibt eine Vorrichtung zum Laserschneiden, bei der eine Mitte eines Öffnungsbereichs einer Gasdüse bezüglich der optischen Achse versetzt angeordnet ist.

EP 0 690 250 A1 beschreibt eine Vorrichtung zum Schweißen von Werkstücken mittels eines fokussierten Laserstrahls und zumindest eines Hilfsgasstrahls.

### Offenbarung der Erfindung

Es ist eine Aufgabe der vorliegenden Offenbarung, eine Vorrichtung zur Materialbearbeitung mit einem Laserstrahl entlang einer Bearbeitungsrichtung und ein Verfahren zur Materialbearbeitung mit einem Laserstrahl bereitzustellen, die eine Qualität einer Schnittfläche an einem Werkstück verbessern können.

Diese Aufgabe wird durch den Gegenstand der unabhängigen Ansprüche gelöst. Vorteilhafte Ausgestaltungen der Erfindung sind in den Unteransprüchen angegeben.

Gemäß Ausführungsformen der vorliegenden Offenbarung ist eine Vorrichtung zur Materialbearbeitung mit einem Laserstrahl entlang einer Bearbeitungsrichtung angegeben. Die Vorrichtung umfasst eine Fokussieroptik zum Fokussieren des Laserstrahls auf ein Werkstück, wobei die Fokussieroptik eine optische Achse definiert, und eine Einstellanordnung. Die Einstallanordnung umfasst eine erste Einstellvorrichtung für den Laserstahl, die eingerichtet ist, um eine Leistungsdichteverteilung oder Intensitätsverteilung des Laserstrahls senkrecht zur Bearbeitungsrichtung nicht-rotationssymmetrisch einzustellen.

Gemäß anderen Ausführungsformen ist ein Verfahren zur Materialbearbeitung mit einem Laserstrahl angegeben. Das Verfahren nach Anspruch 14 umfasst ein Bereitstellen eines Laserstrahls mit einer Leistungsdichteverteilung oder Intensitätsverteilung bezüglich einer optischen Achse, und ein Bearbeiten eines Werkstücks mit dem Laserstrahl entlang einer Bearbeitungsrichtung, wobei die Leistungsdichteverteilung oder Intensitätsverteilung des Laserstrahls senkrecht zur Bearbeitungsrichtung durch Auslenken eines Siemenssterns oder eines Axikons nicht-rotationssymmetrisch eingestellt werden.

Bevorzugte, optionale Ausführungsformen und besondere Aspekte der Offenbarung ergeben sich aus den abhängigen Ansprüchen, den Zeichnungen und der vorliegenden Beschreibung.

Gemäß der vorliegenden Offenbarung wird eine Rotationssymmetrie des Laserstrahls gebrochen. Insbesondere sind die Leistungsdichteverteilung des Laserstrahls senkrecht zur Bearbeitungsrichtung, die beispielsweise eine Schneidrichtung sein kann, nicht-rotationssymmetrisch. Damit kann ein Konturschnitt einseitig, beispielsweise auf Seite des gewünschten Teils, gezielt verbessert werden.

Ausführungsformen der vorliegenden Offenbarung können beispielsweise ein Laserschneiden mit verbesserter Qualität der Schnittkante bereitstellen, insbesondere eine verringerte Rauheit und verringerte Gratbildung, zumindest auf der Seite der Schnittfuge, die dem auszuschneidenden Teil zugeordnet ist. Die Qualität auf der anderen Seite der Schnittfuge kann deutlich schlechter ausfallen, insbesondere wenn dieses Gegenstück als Abfall entsorgt wird.

Während herkömmlicherweise die gleiche Qualität auf beiden Seiten der Schnittfuge erzielt wird, kann die vorliegende Erfindung die Qualität umverteilen und auf einer Seite erhöhen. Dies kann in jeder beliebigen Schneidrichtung möglich sein, wobei die "Gutseite" frei wählbar sein kann. Beispielsweise können sich die Ausführungsformen der vorliegenden Offenbarung automatisch der Schneidrichtung anpassen und somit bei einem Konturschnitt die "Gutseite" stets dem auszuschneidenden Teil zuordnen.

Es können zudem keine externen mechanischen Komponenten am Schneidkopf vorhanden sein, die beispielsweise eine Rotation um die optische Achse vollführen müssen. Alle technischen Implementierungen können kopfintern integriert sein. Zudem kann es jederzeit möglich sein, die Qualitätsumverteilung an- und abzuschalten.

Letzteres ermöglicht es jederzeit, gleiche Schneidbedingungen in allen Richtungen zu erzielen. Das An- und Abschalten kann ferngesteuert und/oder automatisiert möglich sein, ohne mechanisch-händischen Eingriff des Maschinenbedieners.

Weiter kann das System auf Werkstücke aus verschiedenen Materialien und/oder mit unterschiedlichen Dicken anpassbar sein. Die Geschwindigkeit, mit der der Bearbeitungsrichtung gefolgt wird, kann maximal sein, so dass beispielsweise dünne Bleche, deren Bearbeitungsgeschwindigkeit hoch sein sollte, bearbeitet werden können.

### Kurze Beschreibung der Zeichnungen

Ausführungsbeispiele der Offenbarung sind in den Figuren dargestellt und werden im Folgenden näher beschrieben. Es zeigen:
Figur 1 eine schematische Darstellung einer Vorrichtung zur Materialbearbeitung mit einem Laserstrahl entlang einer Bearbeitungsrichtung gemäß Ausführungsformen der vorliegenden Offenbarung,
Figuren 2A und B schematische Darstellungen eines Laserstrahls mit symmetrischer bzw. nicht-rotationssymmetrischer Leistungsdichteverteilung,
Figur 3 eine schematische Darstellung eines Laserschneidprozesses an einem Werkstück gemäß Ausführungsformen der vorliegenden Offenbarung,
Figur 4A eine schematische Darstellung einer Vorrichtung zur Materialbearbeitung mit einem Laserstrahl entlang einer Bearbeitungsrichtung gemäß weiteren Ausführungsformen der vorliegenden Offenbarung,
Figur 4B eine schematische Darstellung einer Schwenkvorrichtung gemäß Ausführungsformen der vorliegenden Offenbarung,
Figur 5A Leistungsdichteverteilungen eines Laserstrahls senkrecht zur optischen Achse in Abhängigkeit der Auslenkung der ersten Einstellvorrichtung gemäß Ausführungsformen der vorliegenden Offenbarung,
Figur 5B Leistungsdichteverteilungen eines Laserstrahls senkrecht zur optischen Achse in einer festen z-Ebene bei Auslenkung der ersten Einstellvorrichtung entlang einer Kreisbahn,
Figur 6A Leistungsdichteverteilungen eines Laserstrahls senkrecht zur optischen Achse in Abhängigkeit der Auslenkung der ersten Einstellvorrichtung gemäß anderen Ausführungsformen der Erfindung,
Figur 6B Leistungsdichteverteilungen eines Laserstrahls senkrecht zur optischen Achse in einer festen z-Ebene bei Auslenkung der ersten Einstellvorrichtung entlang einer Kreisbahn,
Figuren 7A-C schematische Darstellungen von ersten Einstellvorrichtungen gemäß weiteren Ausführungsformen der vorliegenden Offenbarung,
Figuren 8A und B schematische Darstellungen der zweiten Einstellvorrichtung gemäß Ausführungsformen der vorliegenden Offenbarung,
Figur 8C dreidimensionale Darstellung des symmetrischen Gasstrahls und Figur 8D dreidimensionale Darstellung des asymmetrischen Gasstrahls nach Einstellung durch die zweite Einstellvorrichtung gemäß Ausführungsformen der vorliegenden Offenbarung, und
Figur 9 ein Flussdiagramm eines Verfahrens zur Materialbearbeitung mit einem Laserstrahl gemäß Ausführungsformen der Offenbarung.

### Ausführungsformen der Offenbarung

Im Folgenden werden, sofern nicht anders vermerkt, für gleiche und gleichwirkende Elemente gleiche Bezugszeichen verwendet.

Bei der Materialbearbeitung mit einem Laserstrahl, und insbesondere beim Laserschneiden, können ein Laserstrahl als Energiequelle und ein Gasstrahl als Prozesstreiber verwendet werden. Der Gasstrahl kann dabei als Impulsquelle und optional als Oxidationsmittel (z.B. Sauerstoff) verwendet werden. Herkömmlicherweise sind der Laserstrahl und der Gasstrahl rotationssymmetrisch ausgebildet. Genauer gesagt ist die Intensitätsverteilung bzw. Leistungsdichteverteilung des Laserstrahls in jeder Ebene senkrecht zur optischen Achse rotationssymmetrisch. Gleiches kann für die Dichte und Geschwindigkeit des Gases gelten. Hierdurch können in jeder beliebigen Schneidrichtung die gleichen Schneidergebnisse erzielt werden. Eine Anpassung an die Schneidrichtung ist nicht notwendig. Dies ist vor allem beim Bearbeiten von dünnen Blechen mit kleinen Konturen vorteilhaft, da hierbei sehr schnelle und häufige Richtungswechsel auftreten können.

Mit symmetrischem Laser- und Gasstrahl können Schnittspalte erzeugt werden, die beidseitig identisch und somit von gleicher Qualität sind. Es gibt beispielsweise Verschachtelungstechniken, um die Konturen auf einer Blechtafel so zu schachteln, dass die zwei Seiten eines Schnitts zwei verschiedenen Teilen zugeordnet sind. Dies ist jedoch nur für eine sehr begrenzte Zahl von Teilen tatsächlich einsetzbar. Oftmals ist die Teilekontur so geformt, dass das Gegenstück keinen weiteren Zweck erfüllen kann und somit als Abfall entsorgt wird. Die Schnittqualität auf der "Abfallseite" ist daher irrelevant. Somit könnte die Schnittqualität des Abfalls gemindert werden, wenn dadurch Vorteile bezüglich der "Gutseite" entstehen, wie beispielsweise eine erhöhte Qualität der Schnittkante der "Gutseite" und/oder eine erhöhte Bearbeitungsgeschwindigkeit.

Gemäß der vorliegenden Offenbarung wird eine Rotationssymmetrie des Laserstrahls gebrochen. Insbesondere sind die Leistungsdichteverteilung bzw. Intensitätsverteilung des Laserstrahls senkrecht zur Bearbeitungsrichtung, die beispielsweise eine Schneidrichtung sein kann, nicht-rotationssymmetrisch. Dabei ist die nicht-rotationssymmetrische Leistungsdichteverteilung des Laserstrahls an einer Position des Werkstücks ausgebildet. Somit kann ein Konturschnitt einseitig, beispielsweise auf Seite des gewünschten Teils, also der "Gutseite", gezielt verbessert werden.

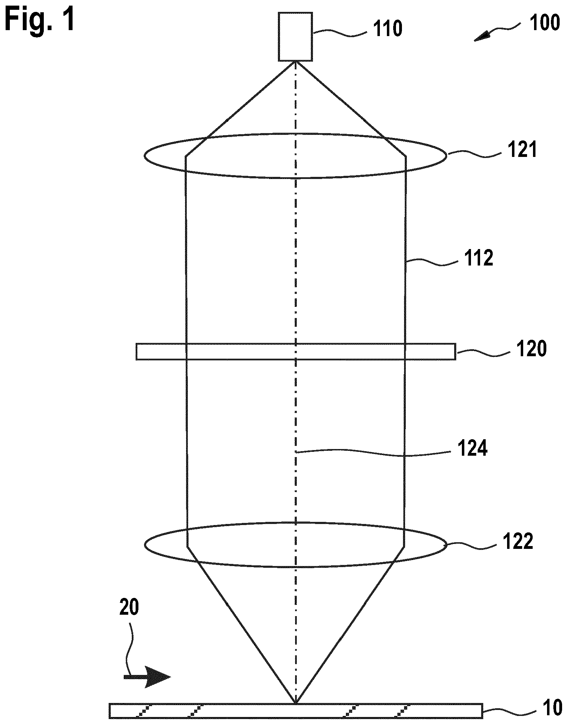

Figur 1 zeigt eine schematische Darstellung einer Vorrichtung 100 zur Materialbearbeitung mit einem Laserstrahl 112 entlang einer Bearbeitungsrichtung 20 gemäß Ausführungsformen der vorliegenden Offenbarung. Die Vorrichtung 100 kann ein Schneidkopf, wie beispielsweise ein Laserschneidkopf sein. Die Bearbeitungsrichtung 20 kann eine Schneidrichtung und/oder eine Bewegungsrichtung der Vorrichtung 100 bezüglich des Werkstücks 10 sein.

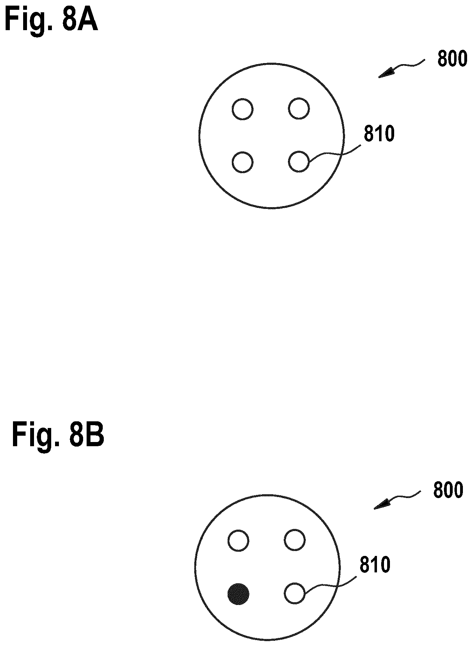

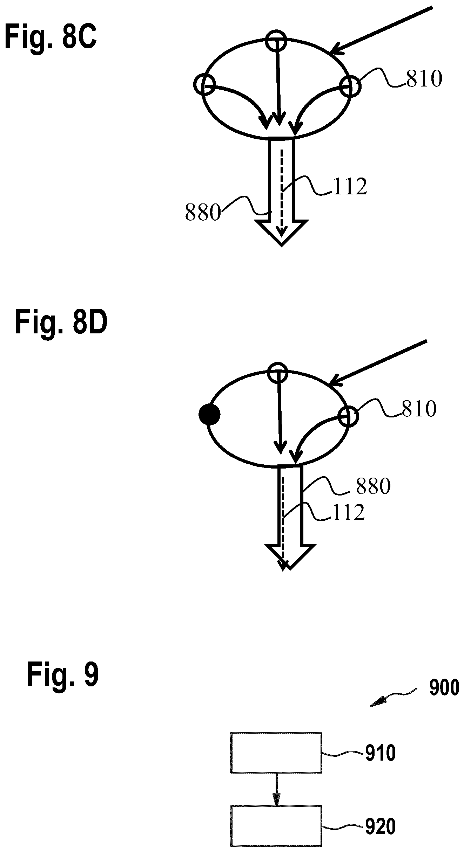

Die Vorrichtung 100 umfasst eine Fokussieroptik 121, 122 zum Fokussieren des Laserstrahls 112 auf das Werkstück 10. Die Fokussieroptik 121, 122 definiert eine optische Achse 124. Die Vorrichtung 100 umfasst weiter eine Einstellanordnung. Die Einstellanordnung umfasst eine erste Einstellvorrichtung 120 für den Laserstahl und/oder eine zweite Einstelleinrichtung 800 für einen Gasstrahl (in Fig. 1 nicht dargestellt, siehe Fig. 8). Der Gasstrahl kann mit dem Laserstrahl 112 überlappt werden. Beispielsweise kann der Gasstrahl umgelenkt werden, so dass der Gasstrahl auf die optische Achse 124 zuströmt und diese entlangströmt.

Die erste Einstellvorrichtung 120 umfasst einen Siemens stern oder ein Axikon, vorzugsweise ein Axikonarray, oder ein abgeflachtes Axikon, optional mit diskretisierter Konus-Fläche oder mit gekrümmter Konus-Fläche. Die erste Einstellvorrichtung 120 für den Laserstrahl 112 ist eingerichtet, um eine Leistungsdichteverteilung oder Intensitätsverteilung des Laserstrahls 112 senkrecht zur Bearbeitungsrichtung 20 nicht-rotationssymmetrisch einzustellen. Anders gesagt wird eine Rotationssymmetrie der Leistungsdichteverteilung des Laserstrahls 112 in einer Ebene senkrecht zur optischen Achse 124 gebrochen. Die Leistungsdichte ist damit in der Ebene senkrecht zur optischen Achse 124 inhomogen. Die optional ebenfalls vorgesehene, zweite Einstellvorrichtung 800 für den Gasstrahl ist eingerichtet, um eine Dichteverteilung bzw. eine Geschwindigkeitsverteilung des Gasstrahls senkrecht zur Bearbeitungsrichtung 20 asymmetrisch einzustellen. Anders gesagt wird eine Rotationssymmetrie der Dichte des Gasstrahls in einer Ebene senkrecht zur optischen Achse 124 gebrochen. Die Dichte ist damit in der Ebene senkrecht zur optischen Achse 124 inhomogen.

Gemäß Ausführungsformen kann die erste Einstellvorrichtung 120 zum Einstellen der Leistungsdichteverteilung des Laserstrahls 112 von ihrer eigentlich vorgesehenen Position auf der optischen Achse 124 ausgelenkt werden. Hierbei kann es sich um eine Auslenkung in x/y Ebene, also quer zur optischen Achse 124 (d.h. in der Ebene senkrecht zur optischen Achse 124) handeln. Alternativ oder optional kann die erste Einstelleinrichtung 120 verkippt werden. Wahlweise kann die erste Einstellvorrichtung 120 auch für eine Auslenkung in beliebige laterale Richtungen eingerichtet sein.

Die Asymmetrie der Leistungsdichteverteilung des Laserstrahls 112 und/oder die Asymmetrie der Dichte des Gasstrahls sind in einer Ebene senkrecht zur optischen Achse 124 vorhanden. Dabei können der Laserstrahl 112 und/oder der Gasstrahl in Ebenen parallel zur optischen Achse 124 eine symmetrische oder homogene Leistungsdichteverteilung bzw. Dichteverteilung aufweisen. Ein Querschnitt des Laserstrahls 112 und/oder des Gasstrahls, also eine räumliche Ausdehnung davon, in der Ebene senkrecht zur optischen Achse 124 kann (rotations)symmetrisch um die optische Achse sein 124. Jedoch ist die Leistungsdichteverteilung bzw. Dichteverteilung innerhalb der Querschnittsfläche des Laserstrahls 112 und/oder des Gasstrahls nicht-rotationssymmetrisch. Anders gesagt sind die Leistungsdichte des Laserstrahls bzw. die Dichte des Gasstrahls innerhalb der Querschnittsfläche inhomogen.

Die Vorrichtung 100 umfasst eine Laserquelle 110 zum Bereitstellen des Laserstrahls 112. Gemäß Ausführungsformen, die mit anderen hier beschriebenen Ausführungsformen kombiniert werden können, umfasst die Vorrichtung 100 eine Gasquelle (nicht gezeigt) zum Bereitstellen des Gasstrahls. Die Gasquelle kann in die Vorrichtung 100, die ein Laserschneidkopf sein kann, integriert sein. Die Gasquelle kann die zweite Einstellvorrichtung 800 umfassen. Die Gasquelle kann eingerichtet sein, um den Gasstrahl mit dem von der Laserquelle 110 bereitgestellten Laserstrahl 112 entlang der optischen Achse 124 zu überlappen.

Die Fokussieroptik 121, 122 kann ein optisches System mit fester Brennweite oder mit variabler Brennweite (Zoom) sein, das die optische Achse 124 definiert. Die Fokussieroptik 121, 122 umfasst mindestens ein abbildendes optisches Element. Die Leistungsdichteverteilung senkrecht zur optischen Achse 124 ist zunächst in allen Ebenen rotationssymmetrisch, sofern die Laserquelle 110 ebenfalls diese Eigenschaft besitzt, was beispielsweise für Lichtleitfasern gilt, deren lichtführender Kern kreisrund oder ringförmig ausgebildet ist. Gemäß der vorliegenden Offenbarung kann das optische System um die erste Einstellvorrichtung 120, z.B. eine Strahlformungsoptik, ergänzt sein, so dass gezielt nicht-rotationssymmetrische Strahlprofile erzeugt werden können.

In manchen Ausführungsformen kann die Fokussieroptik 121, 122 eine Kollimatoroptik 121 und eine Fokussieroptik 122 umfassen. Beispielsweise wird ein aus einer Lichtleitfaser der Laserquelle 110 austretendes divergentes Laserlichtbündel von einer Kollimatoroptik 121 in ein paralleles Laserlichtbündel umgeformt, das von einer Fokussierfinse 122 auf das Werkstück 10 fokussiert wird. Die Einstellanordnung, und insbesondere die erste Einstellvorrichtung 120, kann in das parallele Laserlichtbündel zwischen der Kollimatoroptik 121 und der Fokussieroptik 122 eingesetzt sein.

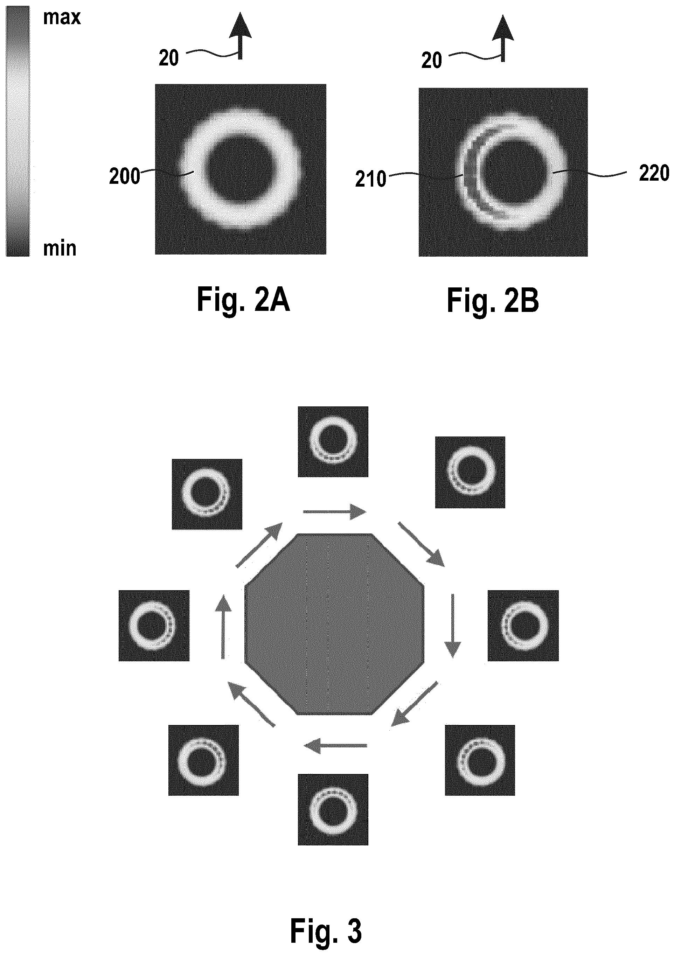

Figuren 2A und B zeigen eine schematische Darstellung eines Laserstrahls mit symmetrischer (Figur 2A) bzw. nicht-rotationssymmetrischer (Figur 2B) Leistungsdichteverteilung in einer Ebene senkrecht zur optischen Achse in Farbskala. Einheit der Skala ist Watt pro Quadratzentimeter (W/cm²), wobei das obere Ende der Skala (rot) den maximalen Wert, z.B. 5,00E+⁰⁶ W/cm², angibt und das untere Ende (Blau) den minimalen Wert 0. Alle Strahlprofil-Darstellungen in Figuren 2A, 2B, 3, 5A, 5B, 6A, und 6B basieren auf dieser Skala.

Die Leistungsdichteverteilung senkrecht zur optischen Achse 124 ist ohne die erste Einstellvorrichtung 120 rotationssymmetrisch, sofern die Laserquelle 110 ebenfalls diese Eigenschaft besitzt. Eine solche symmetrische Leistungsdichteverteilung 200 ist in Figur 2A dargestellt. Die Leistungsdichte bzw. Intensität des Laserstrahls ist im Wesentlichen homogen. Die erste Einstellvorrichtung 120, die eine Strahlformungsoptik sein kann, bricht die Symmetrie des Laserstahls 112, so dass der Laserstrahl 112 eine nicht-rotationssymmetrische Leistungsdichteverteilung aufweist. Die durch die erste Einstellvorrichtung erzeugte nicht-rotationssymmetrische Intensitätsverteilung ist in Figur 2B gezeigt. Die Leistungsdichte bzw. Intensität des Laserstrahls ist inhomogen.

Die nicht-rotationssymmetrische Leistungsdichteverteilung des Laserstrahls weist ein Maximum 210 und ein Minimum 220 auf. Das Maximum 210 ist ein Bereich mit maximaler Leistungsdichte oder Intensität. Das Minimum 220 ist ein Bereich mit minimaler Leistungsdichte oder Intensität. Das Minimum 220, also die minimale Leistungsdichte oder Intensität, kann weniger als 90% des Maximums, also der maximalen Leistungsdichte oder Intensität sein, und kann vorzugsweise weniger als 50%, vorzugsweise weniger als 25%, und noch bevorzugter weniger als 10% sein. Die erste Einstellvorrichtung 120 kann eingerichtet sein, um die Intensität umzuverteilen, wobei die Gesamtintensität des Laserstrahls 112 im Wesentlichen konstant sein kann. Der Bereich mit maximaler Leistungsdichte kann der "Gutseite" zugewandt sein.

Ähnlich kann die asymmetrische Dichteverteilung des Gasstrahls ein Maximum und ein Minimum aufweisen. Das Maximum ist ein Bereich mit maximaler Gasdichte. Das Minimum ist ein Bereich mit minimaler Gasdichte. Das Minimum, also die minimale Gasdichte, kann weniger als 90% des Maximums, also der maximalen Gasdichte sein, und kann vorzugsweise weniger als 50%, vorzugsweise weniger als 25%, und noch bevorzugter weniger als 10% sein. Die zweite Einstellvorrichtung 800 kann eingerichtet sein, um das Gas umzuverteilen, wobei der Gesamtfluss des Gases im Wesentlichen konstant sein kann. Der Bereich mit maximaler Gasdichte kann der "Gutseite" zugewandt sein.

Obwohl die Symmetrie der Leistungsdichteverteilung gebrochen ist, kann eine räumliche Ausdehnung des Laserstrahls 112 in der Ebene senkrecht zur optischen Achse im Wesentlichen symmetrisch sein. Beispielsweise kann die räumliche Ausdehnung des Laserstrahls 112 in der Ebene senkrecht zur optischen Achse 124 symmetrisch um die optische Achse 124 sein, während die Leistungsdichteverteilung nicht-rotationssymmetrisch ist. Selbiges kann analog für den Gasstrahl gelten.

Gemäß Ausführungsformen, die mit anderen hier beschriebenen Ausführungsformen kombiniert werden können, ist die erste Einstellvorrichtung 120 eingerichtet, um ein Maximum der Leistungsdichteverteilung des Laserstrahls 112, also eine maximale Intensität, basierend auf der Bearbeitungsrichtung 20 einzustellen. Alternativ oder optional kann die zweite Einstellvorrichtung 800 eingerichtet sein, um ein Maximum der Dichteverteilung, als eine maximale Dichte, des Gasstrahls basierend auf der Bearbeitungsrichtung 20 einzustellen. Die Bearbeitungsrichtung 20 kann eine Bewegungsrichtung der Vorrichtung bezüglich des Werkstücks sein.

In manchen Ausführungsformen ist die erste Einstellvorrichtung 120 eingerichtet, um die Leistungsdichteverteilung des Laserstrahls 112 senkrecht zur Bearbeitungsrichtung 20 in Abhängigkeit von der Bearbeitungsrichtung 20 asymmetrisch einzustellen. Anders gesagt kann die Leistungsdichte auf einer Seite bezüglich der Bearbeitungsrichtung 20 (links in Figur 2B) höher sein als auf der anderen Seite (rechts in Figur 2B). Beispielsweise kann die Auslenkung der ersten Einstellvorrichtung 120 mit der Bearbeitungsrichtung 20 gekoppelt sein. Die Leistungsdichteverteilung entlang der Bearbeitungsrichtung 20 kann symmetrisch sein. Anders gesagt kann die Leistungsdichte parallel zur Bearbeitungsrichtung 20 im Wesentlichen konstant sein.

Optional kann die zweite Einstellvorrichtung 800 eingerichtet sein, um die Dichteverteilung des Gasstrahls senkrecht zur Bearbeitungsrichtung 20 basierend auf der Bearbeitungsrichtung 20 asymmetrisch einzustellen. Anders gesagt kann die Dichte des Gasstrahls auf einer Seite bezüglich der Bearbeitungsrichtung 20 höher sein als auf der anderen Seite. Die Dichteverteilung entlang der Bearbeitungsrichtung 20 kann symmetrisch sein. Anders gesagt kann die Dichte parallel zur Bearbeitungsrichtung 20 im Wesentlichen konstant sein.

Figur 3 zeigt eine schematische Darstellung eines Laserschneidprozesses an einem Werkstück gemäß Ausführungsformen der vorliegenden Offenbarung.

Der Laserschneidprozess kann ein Einstechen des Laserstrahls in das Werkstück, ein Anfahren des Laserstrahls, und ein Schneiden einer Kontur aus dem Werkstück umfassen. Das Einstechen kann mit einer rotationssymmetrischen Leistungsdichteverteilung 200 erfolgen, wie sie in Figur 2A dargestellt ist. Während des Schneidens der Kontur kann die Leistungsdichteverteilung schrittweise oder kontinuierlich eingestellt werden, so dass der Bereich mit maximaler Leistungsdichte 210 der "Gutseite" zugewandt ist. Insbesondere kann die Leistungsdichteverteilung basierend auf der Bearbeitungsrichtung eingestellt werden, wie es in Figur 3 dargestellt ist. Damit kann eine Qualität der Schnittkanten der "Gutseite", wie beispielsweise eine Rauheit, Rechtwinkeligkeit, Bartbildung, Homogenität, etc., verbessert werden.

Gemäß Ausführungsformen, die mit anderen hier beschriebenen Ausführungsformen kombiniert werden können, ist eine Bearbeitungsgeschwindigkeit der erfindungsgemäßen Vorrichtung wenigstens 0,05m/min, vorzugsweise wenigstens 1m/min, noch bevorzugter wenigstens 10m/min, und noch bevorzugter wenigstens 100m/min.

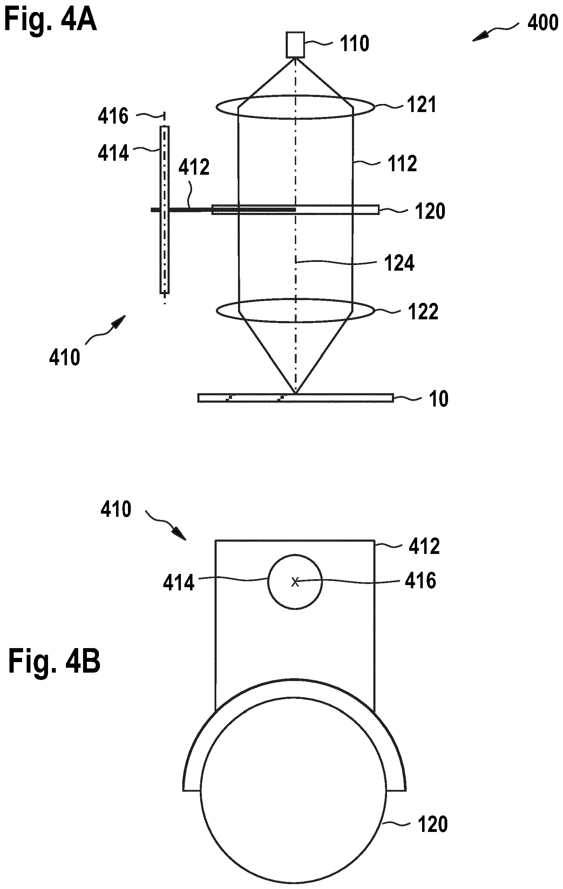

Figur 4A zeigt eine schematische Darstellung einer Vorrichtung 400 zur Materialbearbeitung mit einem Laserstrahl 112 entlang einer Bearbeitungsrichtung gemäß weiteren Ausführungsformen der vorliegenden Offenbarung. Figur 4B zeigt eine schematische Darstellung einer Schwenkvorrichtung 410 der Vorrichtung 400 gemäß Ausführungsformen der vorliegenden Offenbarung.

Gemäß Ausführungsformen, die mit anderen hier beschriebenen Ausführungsformen kombiniert werden können, ist die erste Einstellvorrichtung 120 bezüglich der optischen Achse 124 bewegbar. Insbesondere kann die erste Einstellungsvorrichtung 120 bezüglich der optischen Achse 124 bewegt werden, um die nicht-rotationssymmetrische Leistungsdichteverteilung des Laserstrahls 112 einzustellen und/oder um die Strahlformung an- und abzuschalten. Beispielsweise kann die erste Einstellungsvorrichtung 120 aus dem Strahlengang entfernt (z.B. geschwenkt) werden, um die Strahlformung abzuschalten.

Die erste Einstellvorrichtung 120 kann in einer zur optischen Achse 124 im Wesentlichen senkrechten Ebene bewegbar bzw. auslenkbar sein, um die Leistungsdichteverteilung des Laserstrahls 112 einzustellen und/oder um die Strahlformung an/abzuschalten. Alternativ oder zusätzlich kann die erste Einstellvorrichtung 120 in einer zur optischen Achse 124 im Wesentlichen parallelen Ebene bewegbar bzw. auslenkbar sein, um die Leistungsdichteverteilung des Laserstrahls 112 einzustellen.

Beispielsweise kann die erste Einstellvorrichtung 120 senkrecht und/oder parallel zur optischen Achse 124 verschiebbar sein. In manchen Ausführungsformen kann die erste Einstellvorrichtung 120 bezüglich der optischen Achse 124 verkippbar sein, um die Leistungsdichteverteilung einzustellen. In weiteren Ausführungsformen kann die erste Einstellvorrichtung 120 entlang einer Kreisbahn bewegbar sein. Ein Mittelpunk der Kreisbahn kann auf der optischen Achse 124 liegen. Bei einer derartigen Kreisbewegung kann der Grad der Asymmetrie konstant sein und die Leistungsdichteverteilung um die optische Achse 124 rotieren.

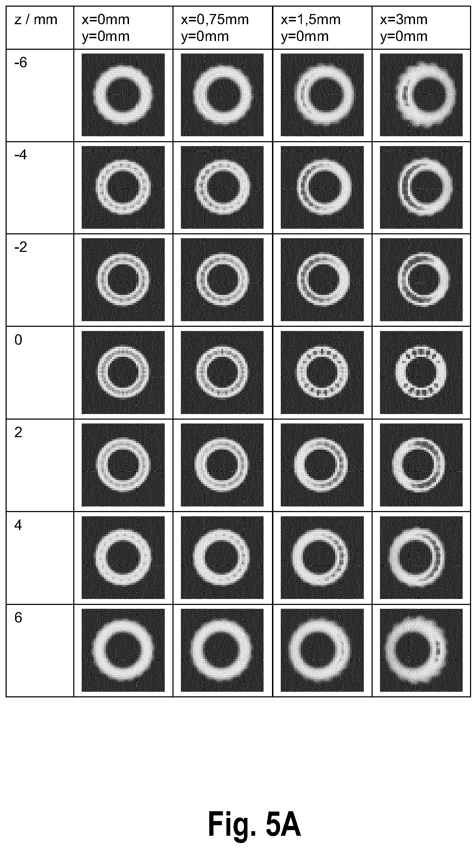

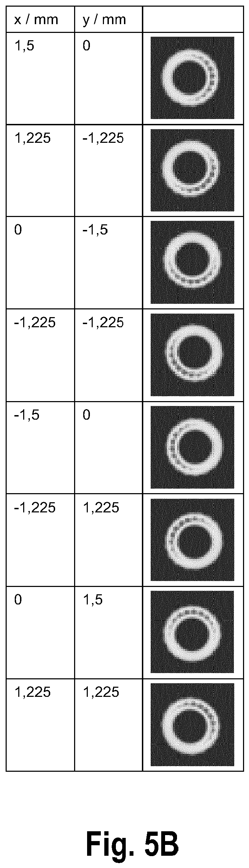

Gemäß Ausführungsformen kann die Leistungsdichteverteilung entlang einer Bewegungsrichtung der ersten Einstellvorrichtung 120 im Wesentlichen symmetrisch sein. Die Leistungsdichteverteilung senkrecht zur Bewegungsrichtung der ersten Einstellvorrichtung hingegen kann nicht-rotationssymmetrisch sein. Ein Beispiel hierfür ist unter Bezugnahme auf den Siemensstern in den Figuren 5A und B illustriert.

Bezugnehmend auf die Figur 4A umfasst die Vorrichtung 400 eine Schwenkvorrichtung 410 mit einem beweglichen Schwenkelement 414, das eine Schwenkachse 416 definiert. Die erste Einstellvorrichtung 120 ist über ein Verbindungselement 412 mit dem beweglichen Schwenkelement 414 verbunden. Um die Strahlformung komplett an/abzuschalten, kann die erste Einstellvorrichtung 120 durch eine Drehung um die Schwenkachse 416 in/aus dem Strahlengang geschwenkt werden. Um die nicht-rotationssymmetrische Strahlformung zu ermöglichen, kann das bewegliche Schwenkelement 414 bzw. die Schwenkachse 416 bewegt werden. Beispielsweise kann die Schwenkachse 416 verschoben oder verkippt werden. Gemäß Ausführungsformen kann die Verschiebung der Schwenkachse 416 in einer Ebene parallel zur optischen Achse 124 und/oder in einer Ebene senkrecht zur optischen Achse 124 erfolgen. Die Verkippung kann derart erfolgen, dass die Schwenkachse 416 und die optische Achse 124 einen Winkel einschließen, der größer als 0° und kleiner als 90° ist. Anders gesagt ist die Verkippung dadurch definiert, dass die Schwenkachse 416 und die optische Achse 124 nicht parallel zueinander sind.

Die optische Achse 124 des Gesamtsystems wird durch die ausgelenkte erste Einstellvorrichtung 120 nur unwesentlich beeinflusst. Kommt es infolge einer leicht veränderten x-y-Lage des Laserstrahls 112 auf dem Werkstück 10 zu einer unerwünschten Formabweichung des gewünschten Teils, so kann die Abweichung vorab in allen Richtungen ermittelt und dann fortan bei der Programmierung der Schneidkontur kompensiert werden. Die Fokuslage des Gesamtsystems ist für alle Auslenkungen der Strahlformungsoptik nahezu identisch, da Strahlformungsoptiken der erste Einstellvorrichtung 120 typischerweise nur eine geringe Formabweichung verglichen mit einer Planplatte besitzen. Falls auftretende Fokuslagenänderungen ins Gewicht fallen, so können diese über ein bewegliches optisches Element der Basis-Optik kompensiert werden.

Figur 5A zeigt Leistungsdichteverteilungen eines Laserstrahls in Ebenen senkrecht zur optischen Achse (x-y-Ebenen) in Abhängigkeit der Auslenkung der ersten Einstellvorrichtung 120, in diesem Fall ein Siemensstern. Die optische Achse verläuft entlang der z-Achse. Figur 5B zeigt Leistungsdichteverteilungen eines Laserstrahls in Ebenen senkrecht zur optischen Achse in einer festen z-Ebene (z = 4mm) bei Auslenkung der ersten Einstellvorrichtung 120 entlang einer Kreisbahn. Bei einer derartigen Kreisbewegung kann der Grad der Asymmetrie konstant sein und die Leistungsdichteverteilung um die optische Achse rotieren.

Gemäß Ausführungsformen, die mit anderen hier beschriebenen Ausführungsformen kombiniert werden können, kann die erste Einstellvorrichtung 120 einen Siemensstern umfassen oder ein Siemensstern sein. Der Siemensstern kann ein plattenförmiges optisches Element sein, das aus einer transparenten Scheibe, insbesondere aus einem Planglas aus Quarzglas oder Zinksulfid besteht, die auf einer Seite siemens sternartige Facetten aufweist, die in azimutaler oder Umfangsrichtung geneigt sind.

Die für die in den Figuren 5A und B gezeigten Simulationen verwendete Anordnung mit einem Siemensstern weist die folgenden Parameter auf: Facetten-Winkel = 0,25°, Brennweiten fc = 100mm und ff = 150mm, Faserkern-Ø = 100µm, und NA = 0,06. Zudem: Ring-Ø = 600µm in der Fokusebene (z=0mm) und Detektorfenstergröße = 1,2 × 1,2mm.

Ist der Siemensstern zentrisch im Strahlengang ausgerichtet, so ist auch die resultierende Leistungsdichteverteilung vor, im und nach dem Fokus rotationssymmetrisch, abgesehen von "Hotspots" aufgrund der endlichen Zahl von Facetten. Wird der Siemensstern aus der optischen Achse in x- und/oder y-Richtung ausgelenkt, so geht die Rotationssymmetrie der Leistungsdichteverteilung verloren, da die einzelnen Facetten mit unterschiedlicher Leistung bestrahlt werden. Entlang der Auslenkrichtung besitzt die Leistungsdichteverteilung immer noch Achsensymmetrie. Quer zur Auslenkrichtung ist die Leistungsdichteverteilung asymmetrisch. Die Größe der x/y-Auslenkung legt dabei den Grad dieser Asymmetrie fest.

Wird die Optik entlang einer Kreisbahn mit der optischen Achse als Mittelpunkt ausgelenkt, wie es in Figur 5B gezeigt ist, so ist der Grad der Asymmetrie konstant und die Leistungsdichteverteilung rotiert um die optische Achse.

Bevorzugt wird die Richtung der Auslenkung bzw. der Bewegung der ersten Einstellvorrichtung 120 an die Schneidrichtung gekoppelt. Gemäß Ausführungen kann die Größe der Auslenkung bzw. der Bewegung der ersten Einstellvorrichtung 120 an Prozessparameter gekoppelt sein. Die Prozessparameter können aus der Gruppe ausgewählt sein, die eine Schneidgeschwindigkeit, eine Fokuslage, einen Schneidgasdruck, und ähnliche Parameter umfasst.

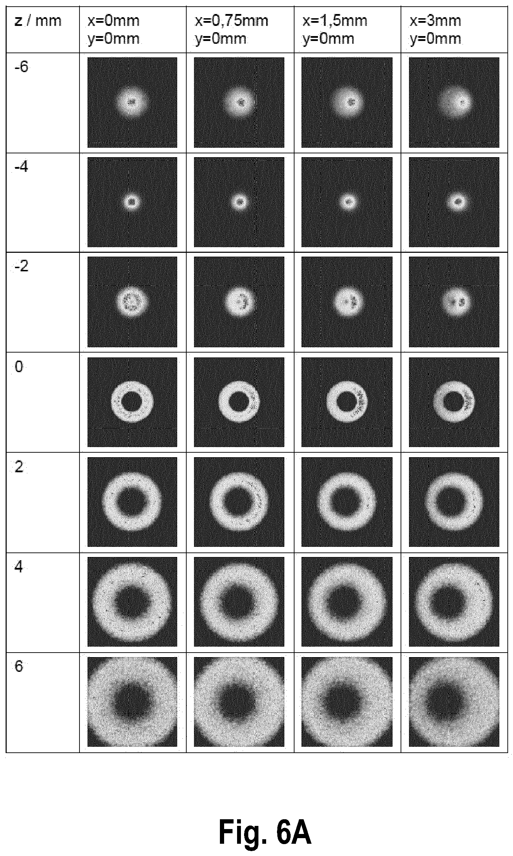

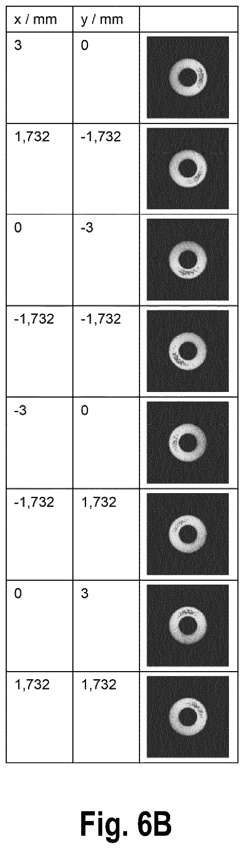

Figur 6A zeigt Intensitätsverteilungen eines Laserstrahls senkrecht zur optischen Achse in Abhängigkeit der Auslenkung der ersten Einstellvorrichtung 120, die hier als Axikon ausgeführt ist. Figur 6B zeigt Intensitätsverteilungen eines Laserstrahls senkrecht zur optischen Achse in einer festen z-Ebene (z = 0mm) bei Auslenkung der ersten Einstellvorrichtung entlang einer Kreisbahn.

Ein Axikon ist eine konisch geschliffene Linse. Das Axikon bildet eine Punktquelle auf eine Linie entlang der optischen Achse ab, oder transformiert den Laserstrahl in einem Ring.

Die für die in den Figuren 6A und B gezeigten Simulationen verwendete Anordnung mit einem Axikon weist die folgenden Parameter auf: Axikon-Winkel = 0,17°, Brennweiten fc = 100mm und ff = 150mm, Faserkern-Ø = 100µm und NA = 0,1. Zudem: Ring-Ø = 400µm in der Fokusebene (z = 0mm) und Detektorfenstergröße = 1,2 x 1,2mm.

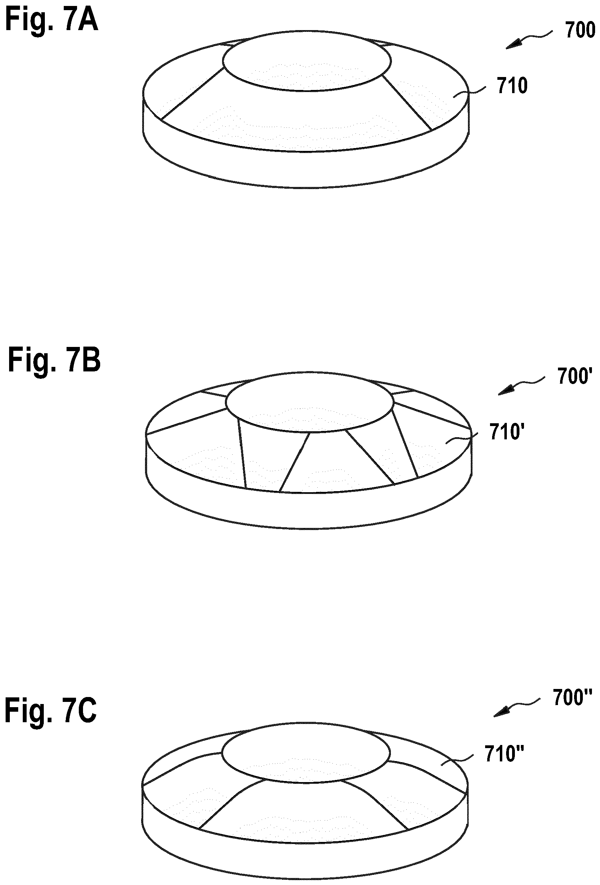

Verschiedene Ausführungsformen eines Axikons sind in den Figuren 7A-C dargestellt. Figur 7A zeigt ein abgeflachtes Axikon 700 mit Fläche 710 anstelle einer Konusspitze, das eine Abschaltung der nicht-rotationssymmetrischen Strahlformung bei zentrischer Ausrichtung ermöglicht. In einigen Ausführungsformen kann das Axikon 700`diskretisierte Konus-Flächen 710' aufweisen (Figur 7B). Dies ermöglicht eine höhere Intensität auf seitlichen Spots. Auch kann das Axikon 700" gemäß Ausführungsformen eine gekrümmte Konus-Fläche 710" aufweisen (Figur 7C). Dies erlaubt eine Streckung der seitlichen Spots in radialer Richtung.

Figuren 8A und B zeigen schematische Darstellungen der zweiten Einstellvorrichtung 800 gemäß Ausführungsformen der vorliegenden Offenbarung.

In manchen Ausführungsformen kann zusätzlich zum Laserstrahl 112 auch der Gasstrahl nicht-rotationssymmetrisch geformt werden. Der Gasstrahl kann dabei wie auch der Laserstrahl 112 in Abhängigkeit der Bearbeitungsrichtung ausgerichtet werden. Gemäß Ausführungsformen, die mit anderen hier beschriebenen Ausführungsformen kombiniert werden können, umfasst die Vorrichtung zur Materialbearbeitung mit einem Laserstrahl eine Gasquelle zum Bereitstellen des Gasstrahls, wobei die Gasquelle eine Vielzahl von Austrittsöffnungen 810 aufweist, und wobei die zweite Einstellvorrichtung 800 zum selektiven Öffnen und/oder Schließen einer oder mehrerer der Austrittsöffnungen 810 eingerichtet ist, um die Dichteverteilung des Gasstrahls einzustellen. Insbesondere kann der asymmetrische Gasstrahl durch Sperre einer oder mehrerer der beispielsweise gleichmäßig verteilten Austrittsöffnungen 810 erzeugt werden.

Typischerweise erfolgt der Einlass des Gases in die Vorrichtung 100 bzw. 400, die ein Laserbearbeitungskopf oder ein Schneidkopf sein kann, von einer Seite. Das Gas kann dann kopfintern koaxial mit dem Laserstrahl 112 überlappt werden. Bevorzugt wird das Gas zunächst so aufgeteilt umgelenkt, dass ein Gasstrahl 880 von mehreren Raumrichtungen gleichmäßig auf die optische Achse 124 zuströmt (vgl. Figur 8C). Dies kann beispielsweise durch eine Vielzahl von symmetrisch angeordneten Austrittsöffnungen 810 geschehen. Dies bietet die Möglichkeit, einzelne Austrittsöffnungen 810 (also Gasauslässe) zu versperren. Hierdurch kann eine Asymmetrie erzwungen werden (vgl. Figur 8D). Bevorzugt können beliebige dieser Austrittsöffnungen 810 versperrt werden. Dies kann motorisch und optional automatisiert erfolgen. In den Figuren 8A und B sind offene Austrittsöffnungen als offene Kreise und geschlossene Austrittsöffnungen als ausgefüllte Kreise dargestellt. In einigen Ausführungsformen kann die zweite Einstellvorrichtung 800 eine rotierbare Lochblende umfassen oder kann eine rotierbare Lochblende sein.

Figur 9 zeigt ein Flussdiagramm eines Verfahrens 900 zur Materialbearbeitung mit einem Laserstrahl gemäß Ausführungsformen der Offenbarung. Das Verfahren 900 kann die Vorrichtung zur Materialbearbeitung mit einem Laserstrahl in einer Bearbeitungsrichtung gemäß der vorliegenden Offenbarung verwenden.

Das Verfahren 900 umfasst im Schritt 910 ein Bereitstellen eines Laserstrahls mit einer Leistungsdichteverteilung bezüglich einer optischen Achse, und im Schritt 920 ein Bearbeiten eines Werkstücks mit dem Laserstrahl entlang einer Bearbeitungsrichtung, wobei die Leistungsdichteverteilung des Laserstrahls senkrecht zur Bearbeitungsrichtung nicht-rotationssymmetrisch sind.

Gemäß der vorliegenden Offenbarung wird eine Laserleistungsdichteverteilung, deren Intensitätsmaximum und/oder "Schwerpunkt" in Abhängigkeit der Bearbeitungsrichtung von der optischen Achse ausgelenkt wird, erzeugt. Insbesondere kann eine Strahlformungsoptik in einem Lasermaterialbearbeitungskopf eingesetzt werden, wobei die Strahlformungsoptik in Abhängigkeit der Bearbeitungsrichtung ausgelenkt und/oder verkippt wird, jeweils in Bezug auf die optische Achse des Systems. Dadurch kann beispielsweise ein Laserschneiden mit verbesserter Qualität der Schnittkante bereitgestellt werden, insbesondere eine verringerte Rauheit und verringerte Gratbildung, zumindest auf der Seite der Schnittfuge, die dem auszuschneidenden Teil zugeordnet ist.

## Patentansprüche

1. Vorrichtung (100, 400) zur Materialbearbeitung mit einem Laserstrahl (112) in einer Bearbeitungsrichtung (20), umfassend:
eine Fokussieroptik (121, 122) zum Fokussieren des Laserstrahls (112) auf ein Werkstück (10), wobei die Fokussieroptik (121, 122) eine optische Achse (124) definiert, und
eine Einstellanordnung mit einer Einstellvorrichtung (120) für den Laserstahl (112), die eingerichtet ist, um eine Leistungsdichteverteilung des Laserstrahls (112) senkrecht zur Bearbeitungsrichtung (20) nicht-rotationssymmetrisch einzustellen,
**dadurch gekennzeichnet, dass**
die Einstellvorrichtung (120) einen Siemensstern oder ein Axikon umfasst, wobei zum Einstellen der Leistungsdichteverteilung des Laserstrahls (112) die Einstellvorrichtung (120) bezüglich der optischen Achse (124) auslenkbar ist.

2. Die Vorrichtung (100, 400) nach Anspruch 1, wobei zum Einstellen der Leistungsdichteverteilung des Laserstrahls (112) die Einstellvorrichtung (120) bezüglich der optischen Achse (124) in einer zur optischen Achse (124) im Wesentlichen senkrechten Ebene und/oder in einer zur optischen Achse (124) im Wesentlichen parallelen Ebene auslenkbar ist.

3. Die Vorrichtung (100, 400) nach Anspruch 1 oder 2, wobei die Einstellvorrichtung (120) entlang einer Kreisbahn auslenkbar ist, wobei ein Mittelpunkt der Kreisbahn auf der optischen Achse (124) liegt, oder wobei die Einstellvorrichtung (120) linear auslenkbar ist.

4. Die Vorrichtung (100, 400) nach einem der Ansprüche 1, 2 oder 3, wobei die Auslenkungsrichtung der Einstellvorrichtung (120) an die Bearbeitungsrichtung (20) gekoppelt ist.

5. Die Vorrichtung (100, 400) nach einem der Ansprüche 1 bis 4, wobei die Größe der Auslenkung der Einstellvorrichtung (120) an einen oder mehrere Prozessparameter, ausgewählt aus der Gruppe umfassend Bearbeitungsgeschwindigkeit, Fokuslage, und Schneidgasdruck, gekoppelt ist.

6. Die Vorrichtung (100, 400) nach einem der vorausgehenden Ansprüche 1 bis 5, wobei die Einstellvorrichtung (120) eingerichtet ist, die Leistungsdichteverteilung in einer Auslenkungsrichtung der Einstellvorrichtung (120) achsensymmetrisch und/oder senkrecht zur Auslenkungsrichtung der Einstellvorrichtung (120) nicht-rotationssymmetrisch einzustellen.

7. Die Vorrichtung (100, 400) nach einem der vorausgehenden Ansprüche, wobei die Einstellvorrichtung (120) eingerichtet ist, zwischen einer nicht-rotationssymmetrischen und einer rotationssymmetrischen Leistungsdichteverteilung des Laserstrahls (112) hin und her zu schalten.

8. Die Vorrichtung (100, 400) nach einem der vorausgehenden Ansprüche, ferner umfassend eine weitere Einstellvorrichtung (800) für einen Gasstrahl (880), die eingerichtet ist, um eine Dichteverteilung des Gasstrahls (880) senkrecht zur Bearbeitungsrichtung (20) nicht-rotationssymmetrisch einzustellen.

9. Die Vorrichtung (100, 400) nach Anspruch 8, weiter mit einer Gasquelle zum Bereitstellen des Gasstrahls (880), wobei die Gasquelle eine Vielzahl von symmetrisch zur optischen Achse (124) angeordneten Austrittsöffnungen (810) aufweist.

10. Die Vorrichtung (100, 400) nach Anspruch 9, wobei die weitere Einstellvorrichtung (800) zum selektiven Öffnen und/oder Schließen einer oder mehrerer der Austrittsöffnungen (810) eingerichtet ist, um die Dichteverteilung des Gasstrahls einzustellen.

11. Die Vorrichtung (100, 400) nach einem der Ansprüche 8 bis 10, wobei der Gasstrahl (880) mit dem Laserstrahl (112) innerhalb der Vorrichtung koaxial überlagerbar ist.

12. Die Vorrichtung (100, 400) nach einem der Ansprüche 8 bis 11, wobei die Einstellvorrichtung (800) für einen Gasstrahl (880) eingerichtet ist, zwischen einer nicht-rotationssymmetrischen und einer symmetrischen Dichteverteilung des Gasstrahls (880) hin und her zu schalten.

13. Die Vorrichtung (100, 400) nach einem der vorausgehenden Ansprüche, wobei die Vorrichtung einen Laserbearbeitungskopf oder einen Laserschweißkopf umfasst, oder wobei die Vorrichtung ein Schneidkopf, insbesondere ein Laserschneidkopf, ist.

14. Verfahren (900) zur Materialbearbeitung mit einem Laserstrahl, umfassend:
Bereitstellen (910) eines Laserstrahls mit einer Leistungsdichteverteilung bezüglich einer optischen Achse; und
Bearbeiten (920) eines Werkstücks mit dem Laserstrahl in einer Bearbeitungsrichtung,
wobei die Leistungsdichteverteilung des Laserstrahls senkrecht zur Bearbeitungsrichtung nicht-rotationssymmetrisch durch Auslenken eines Siemenssterns oder eines Axikons bezüglich der optischen Achse (124) eingestellt wird.

15. Verfahren (900) nach Anspruch 14, wobei ferner eine Dichteverteilung eines Gasstrahls (880) senkrecht zur Bearbeitungsrichtung nicht-rotationssymmetrisch eingestellt wird.

## Claims

1. A device (100, 400) for machining material with a laser beam (112) in a machining direction (20), comprising:
a focusing optics (121, 122) for focusing said laser beam (112) onto a workpiece (10), said focusing optics (121, 122) defining an optical axis (124); and
an adjusting arrangement comprising an adjusting device (120) for said laser beam (112), which is configured to adjust a power density distribution of said laser beam (112) perpendicular to said machining direction (20) to be asymmetric,
**characterized in that**
the adjusting device (120) comprises a Siemens star or an axicon, wherein, for adjusting the power density distribution of said laser beam (112), said adjusting device (120) is displaceable with respect to said optical axis (124).

2. The device (100, 400) according to claim 1, wherein, for adjusting the power density distribution of said laser beam (112), said adjusting device (120) is displaceable with respect to said optical axis (124) in a plane substantially perpendicular to said optical axis (124) and/or in a plane substantially parallel to said optical axis (124).

3. The device (100, 400) according to claim 1 or 2, wherein said adjusting device (120) is displaceable along a circular path, a center of said circular path being on said optical axis (124), or wherein said adjusting device (120) is linearly displaceable.

4. The device (100, 400) according to one of claims 1, 2 or 3, wherein the displacement direction of said adjusting device (120) is coupled to said machining direction (20).

5. The device (100, 400) according to one of claims 1 to 4, wherein the magnitude of the displacement of said adjusting device (120) is coupled to one or more process parameters, selected from the group consisting of machining speed, focus position and cutting gas pressure.

6. The device (100, 400) according to one of the preceding claims 1 to 5, wherein said adjusting device (120) is configured to adjust the power density distribution to be axisymmetric in a displacement direction of said adjusting device (120) and/or to be asymmetric perpendicular to the displacement direction of said adjusting device (120).

7. The device (100, 400) according to one of the preceding claims, wherein said adjusting device (120) is configured to switch between an asymmetric and a symmetric power density distribution of said laser beam (112).

8. The device (100, 400) according to one of the preceding claims, further comprising a further adjusting device (800) for a gas jet (880) configured to adjust a density distribution of said gas jet (880) perpendicular to said machining direction (20) to be asymmetric.

9. The device (100, 400) according to claim 8, further comprising a gas source for providing said gas jet (880), said gas source having a plurality of outlet openings (810) which are adjusted symmetrically about said optical axis (124).

10. The device (100, 400) according to claim 9, wherein said further adjusting device (800) is configured to selectively open and/or close one or more of said outlet openings (810) in order to adjust the density distribution of said gas jet.

11. The device (100, 400) according to one of claims 8 to 10, wherein said gas jet (880) is coaxially superposable with said laser beam (112) within said device.

12. The device (100, 400) according to one of claims 8 to 11, wherein said adjusting device (800) for a gas jet (880) is configured to switch between asymmetric and symmetric density distribution of said gas jet (880).

13. The device (100, 400) according to one of the preceding claims, wherein said device comprises a laser machining head or a laser welding head, or wherein the device is a cutting head, particularly a laser cutting head.

14. A method (900) for machining material with a laser beam, comprising:
providing (910) a laser beam having a power density distribution with respect to an optical axis; and
machining (920) a workpiece with said laser beam in a machining direction,
wherein the power density distribution of said laser beam is adjusted to be asymmetric, by displacing a Siemens star or an axicon, with respect to said optical axis (124), perpendicular to said machining direction.

15. The method (900) according to claim 14, wherein, further, a density distribution of a gas jet (880) is adjusted perpendicular to said machining direction to be asymmetric.

## Revendications

1. Dispositif (100, 400) destiné à usiner un matériau avec un faisceau laser (112) dans une direction d'usinage (20), comprenant :
une optique de focalisation (121, 122) pour focaliser le faisceau laser (112) sur une pièce (10), dans lequel l'optique de focalisation (121, 122) définit un axe optique (124) ; et
un système de réglage avec un dispositif de réglage (120) pour le faisceau laser (112) qui est conçu pour régler une répartition de densité de puissance du faisceau laser (12) perpendiculairement à la direction d'usinage (20) sans symétrie de révolution,
**caractérisé en ce que**
le dispositif de réglage (120) comprend une étoile Siemens ou un axicon, dans lequel le dispositif de réglage (120) peut être dévié par rapport à l'axe optique (124) afin de régler la répartition de densité de puissance du faisceau laser (112).

2. Dispositif (100, 400) selon la revendication 1, dans lequel le dispositif de réglage (120) peut être dévié par rapport à l'axe optique (124) dans un plan sensiblement perpendiculaire à l'axe optique (124) et/ou dans un plan sensiblement parallèle à l'axe optique (124) afin de régler la répartition de densité de puissance du faisceau laser (112).

3. Dispositif (100, 400) selon la revendication 1 ou 2, dans lequel le dispositif de réglage (120) peut être dévié le long d'un trajet circulaire, dans lequel un centre du trajet circulaire est sur l'axe optique (124), dans lequel le dispositif de réglage (120) peut être dévié linéairement.

4. Dispositif (100, 400) selon l'une des revendications 1, 2 ou 3, dans lequel la direction de déviation du dispositif de réglage (120) est couplée à la direction d'usinage (20).

5. Dispositif (100, 400) selon l'une des revendications 1 à 4, dans lequel la grandeur de déviation du dispositif de réglage (120) est couplée à un ou plusieurs paramètres de processus choisis parmi le groupe constitué d'une vitesse d'usinage, d'une position focale et d'une pression de gaz de coupe.

6. Dispositif (100, 400) selon l'une des revendications 1 à 5 précédentes, dans lequel le dispositif de réglage (120) est conçu pour régler la répartition de densité de puissance dans une direction de déviation du dispositif de réglage (120) avec une symétrie axiale et/ou perpendiculairement à la direction de déviation du dispositif de réglage (120) sans symétrie de révolution.

7. Dispositif (100, 400) selon l'une des revendications précédentes, dans lequel le dispositif de réglage (120) est conçu pour commuter en va-et-vient entre une répartition de densité de puissance du faisceau laser (112) sans symétrie de révolution et une répartition de densité de puissance avec une symétrie de révolution.

8. Dispositif (100, 400) selon l'une des revendications précédentes, comprenant en outre un dispositif de réglage supplémentaire (800) pour un jet de gaz (880), qui est conçu pour régler une répartition de densité du jet de gaz (880) perpendiculairement à la direction d'usinage (20) sans symétrie de révolution.

9. Dispositif (100, 400) selon la revendication 8, comportant en outre une source de gaz destinée à fournir le jet de gaz (880), dans lequel la source de gaz comporte une pluralité d'orifices de sortie (810) agencés symétriquement par rapport à l'axe optique (124).

10. Dispositif (100, 400) selon la revendication 9, dans lequel le dispositif de réglage supplémentaire (800) est conçu pour ouvrir et/ou fermer sélectivement un ou plusieurs des orifices de sortie (810) afin de régler la répartition de densité du jet de gaz.

11. Dispositif (100, 400) selon l'une des revendications 8 à 10, dans lequel le jet de gaz (880) peut être superposé coaxialement au faisceau laser (112) à l'intérieur du dispositif.

12. Dispositif (100, 400) selon l'une des revendications 8 à 11, dans lequel le dispositif de réglage (800) pour un jet de gaz (880) est conçu afin de commuter en va-et-vient entre une répartition de densité de puissance du jet de gaz (880) sans symétrie de révolution et une répartition de densité de puissance avec une symétrie de révolution.

13. Dispositif (100, 400) selon l'une des revendications précédentes, dans lequel le dispositif comprend une tête d'usinage laser ou une tête de soudage laser, ou dans lequel le dispositif est une tête de coupe, en particulier une tête de coupe laser.

14. Procédé (900) d'usinage de matériau avec un faisceau laser, comprenant les étapes consistant à :
fournir (910) un faisceau laser avec une répartition de densité de puissance par rapport à un axe optique ; et
usiner (920) une pièce avec le faisceau laser dans une direction d'usinage,
dans lequel la répartition de densité de puissance du faisceau laser est réglée perpendiculairement à la direction d'usinage sans symétrie de révolution en faisant dévier une étoile Siemens ou un axicon par rapport à l'axe optique (124).

15. Procédé (900) selon la revendication 14, dans lequel une répartition de densité d'un jet de gaz (880) est en outre réglée perpendiculairement à la direction d'usinage sans symétrie de révolution.
